# EUROPEAN PATENT APPLICATION

(11) **EP 4 404 125 A1**
(43) Date of publication of application: **24.07.2024**
(21) Application number: 23152791.2
(22) Date of filing: 20.01.2023
(51) Int. Cl.: G06Q 20/38, G06Q 20/40, H04L 9/00, B42D 25/30, G06Q 20/36, G07D 7/004, H04L 9/32, H04L 9/08

(54) **REASSIGNING A DIGITAL REPRESENTATION OF A PHYSICAL ITEM**

(71) Applicant: Authentic Vision GmbH, 5071 Wals (AT)
(72) Inventor: Bergmüller, Thomas, 5071 Wals (AT); Weiß, Thomas, 5071 Wals (AT)
(74) Representative: SONN Patentanwälte GmbH & Co KG

(57) **Abstract**

A method for reassigning a digital representation of a physical item from a donor to a beneficiary, wherein the physical item comprises a security device, wherein the donor and the beneficiary are digital accounts, wherein each digital account is associated with an address in a cryptographic addressing system, the method comprising the following steps:
obtaining proof of access to the security device by performing a measurement of a physical property of the security device,
transmitting the address associated with the beneficiary in connection with the proof of access to a trusted authority,
performing an atomical reassignment of the digital representation to the address associated with the beneficiary responsive to authenticating the proof of access by the trusted authority.

## Description

The present invention concerns a method for reassigning a digital representation of a physical item from a donor to a beneficiary, wherein the physical item comprises a security device. The donor and the beneficiary are digital accounts, wherein each digital account is associated with an address in a cryptographic addressing system.

With the current advances of "Web3" technologies ("Decentralized internet"), the upcoming trend of applications in distributed ledger technology ("dapp"), virtual, augmented or extended reality, metaverse etc, a need for managing digital representations of physical items (also known as "digital twins" or "phygital objects") emerges. Typically, when using Distributed Ledger Technology, the digital representations of physical items is done in form of so called Non-Fungible Token (NFT). In immersive software applications, so called "Metaverses", and similar graphic-focused technologies such as e.g. virtual reality VR and extended reality XR, developers want to anchor real-world items in a 1:1 manner into the digital world. In Metaverses or dapps in general a digital representation of a physical item can be seen as an asset. In applications such as VR/XR it may be desired to displaying specific digital content or overlays only when a physical item is accessible to the user operating a metaverse-character or e.g. wearing VR/XR glasses and operating related software applications.

Transformation or augmentation in the virtual environment is much easier achievable than in a physical environment; different utilizations, digital traits, visualizations, and abstractions can be applied to different representations of the very same physical item - depending on the software application. However, it is unclear, how the various digital representations can be strictly bound to the single physical item they represent.

Internet of Things (IoT), Industry 3.0/4.0 and similar concepts already contributed greatly to the interoperability of inherently physical items with the digital world. Yet most physical items still do not have computational capabilities of their own. They are usually embedded in a digital ecosystem through identification. Means for identification are for example passive or active identification chips (RFID, NFC, ...), markers (Barcodes, Human-Readable Identifiers) or any other suitable technology. Commonly, the retrieved identifier (active or passive means) and the identifier then being used to request parameters or other digital data for said physical items from a centralized or decentralized database. However, maintaining such databases poses a significant interoperability challenge. Typically, each software application may have its own database system providing data in a suitable or standardized format. In either case, the interoperability, protection and access control of data points among different software applications are challenging and at least requires collaboration between the software application developers. One common approach is the use of token representations in a distributed ledger, often referred to as block chains which are inherently public and anyone can access or publish information. In such distributed ledger applications, physical items are often represented through so called non-fungible tokens (NFTs). NFTs are suitable to represent a physical item (hence "digital representation") and can be owned and controlled by accounts, characterized by having a cryptographic address in such a distributed ledger. These accounts are often referred to as wallets. NFTs are designed as digital assets, which can be transferred between accounts. Such a transfer is usually initiated by the current controller ("holder") of the NFT. In most distributed ledgers, e.g. the Ethereum block chain, the initiator of the transaction is responsible to pay the transaction fees, often referred to as "gas fees".

However, especially the implementation of ownership and possession is a challenge, under the requirement that the ownership of the physical item and its digital representation shall be strictly bound together. For example, it shall not be possible to transfer control or ownership of the digital representation without making the physical item accessible to the new owner or controller as well. This intuitively contradicts purpose of NFTs, which are tokens that can be controlled (transferred, hidden, destroyed) by the account holding the token in an effectively unrestricted manner.

Currently there are several approaches of digital representation of physical items being explored in the industry. Many approaches augment a certain class of digital items, often through identifying the class of the object and showing e.g. a digital overlay. For example, all wine bottles of a specific brand may get the same digital overlay. There are also solutions, which already aim to augment a specific, uniquely identifiable physical item. This is typically done by equipping the physical item with a unique ID. Finally, there are approaches where the physical item acts as a key and after some form of identification a user gets permission to create a digital representation (known as "minting"), typically realized through a Non-Fungible Token (NFT). The NFT is then controlled by a user or smart contract account.

Below we exemplarily list solutions that differ from the present invention greatly in one common aspect: once a digital representation has been created, it can be used, controlled and transferred independently of the physical item.

For example, EIP-5791 (accessible at https://eips.ethereum.org/EIPS/eip-5791) proposes a Physically Backed Token (PBT). A first trial with physical collectibles leveraging the PBT has been finished successfully (see https://www.azuki.com/). The collectibles have an integrated chip that can sign Ethereum transactions and hence serves as a form of wallet. Contrary to the present disclosure, PBT does not manage the on-chain token by limiting its use and transfer. Therefore the resulting NFT is unfit for use cases that involve e.g. collateralization, because the NFT does not represent the physical item (properties, traits and capabilities). As there is no limit on minting (every device with access to the appropriate app to interact with the integrated chip), the digital PBT cannot be used in use cases with scarcity. Physical items and digital representations can be transferred and controlled independently from each other. Hence, this application and applications using PBT in general rather use the physical item as a key to acquire the permission to mint, but in no way binds the resulting digital PBT to the physical item.

As another example, AllRightsReserved (AAR) by DDT store is a microchip based procedure utilizing the NFC standard by embedding an NFC-chip into a physical item. The corresponding app is utilizing NFC features to retrieve physical item IDs in an identification system. The primary goal of this operation is to ensure authenticity of the physical item. Optionally, ARR offers to mint a NFT for the specific physical item. DDT has various series of collectibles that feature the NFC-based ARR technology. Physical items equipped with a security device (the NFC chip) are identified and then minted into a specific token. Contrary to the present disclosure, that token cannot be revoked or reassigned. The minted token merely has the characteristic of a "digital copy" that can be transferred and sold independent from the physical item.

US 2021/0245542 A1 proposes optical recognition on a printable cryptographic marker (security device) attached to physical items. The document itself essentially concerns a technology for marker security without disclosing DLT-related aspects. However, for example an application called Gummy.link uses that technology (refer Ethereum Contract oxf7302d66c61fd36ce3a084f16ed58bdce78bcf63) to issue NFTs bound to a unique physical item ID. Again, this implementation is not capable of revoking the NFTs nor converting them to different formats, i.e. supporting multiple different digital representations. Further, the "digital copies" cannot be created or revoked based on environmental factors like i.e. a physical transfer of the object. It can therefore not strictly bind a physical item to its digital representations. Both can be transferred and controlled independently.

Verisart (see https://verisart.com/) uses QR codes as an identification feature in combination with traditional holograms and other security features. This suite of identification and security features forms a security device, which is attached to the back of framed paintings or other types of artworks. The purpose is to track certificates of authenticity for artwork. The certificates are minted as NFTs. This solution is viable for art certificates but has some draw-backs. The certificate is transferable, but transfer only together with the physical item cannot be enforced. Hence it is possible that certificates get lost and - when control over digital representation and physical item diverges for whatever reason, e.g. theft - it is unclear who the legitimate owner is, the holder of the physical artwork or the holder of the NFT. Furthermore, the solution does not have a way to revoke any of the issued certificates. Also, the holographic effects next to the QR-Codes are merely for visual authentication and optical effect and not an integral part of the technical solution, making the security device comparatively easy to counterfeit, e.g. via a photocopy.

US 10 505 726 B1 proposes a system and method that outlines how a digital asset associated with a physical product is designed to be transferrable, modifiable and tradeable but not-copyable, in order to create a sense of virtual scarcity, authenticity and brand value. This essentially represents an NFT. The transfer of the digital asset associated with the physical product is not realized via the presence of the physical retail product itself but merely by using a transaction (purchase receipt) to verify a transaction has been made. This suggests, that this follows the mechanism of a one-time code, hence providing the retail purchaser of the product the right to mint a digital asset. Nothing is disclosed, how further transactions from a retail purchaser to a third person (e.g. second-hand sales, gifts etc.) shall be realized and if (and if so how) the digital asset is transferred together with the product. In fact, the prior art rather suggests that the digital asset may be traded independently and rather sees the mint of a digital asset as brand promotion and the digital asset not as an integral part of the physical product.

There are approaches attempting to preserve the integrity between ownership/control over the physical item and its digital representation. However, all approaches that we know of rather initiate a digital transaction, which is only executed if the initiator (hence the donor, i.e. holder of the current digital representation, and no one else) can prove physical access to the physical item. Optionally, the beneficiary even needs to confirm by proving physical access to the same physical item. Hence, a physical item can be transferred (or stolen), yet if the donor does not also initiate the corresponding transfer of the digital representation, ownership and control of physical item and digital representation inevitably diverge.

US 2021/0245542 A1 discloses DLT technology to uniquely associate a digital asset with a physical asset. Yet again, transactions must be initiated digitally and it is a smart contract that dictates a request to verify the provenance of the associated physical item responsive to e.g. a digitally triggered transaction. The associated physical item and its verification are merely used as a pre-condition to execute the previously and digitally triggered digital transaction. Hence, only the controller of the digital representation may initiate transactions, while the controller of the physical item can only prevent transactions, but not initiate them. Like earlier introduced technologies, this inevitably results in diverging control over physical item and the associated digital representation, if the controller of the digital item is unwilling or incapacitated to verify the physical item. This may happen if e.g. the private key to the account holding the digital representation is lost or the human controller of an account is incapacitated (medical conditions, death, passphrase was forgotten). US 2021/0245542 A1 does not disclose a suitable system or means for a setting, where the transfer of the physical item shall automatically or semi-automatically also transfer the digital representations associated with the physical item.

WO 2019/175878 A1 discloses a system and method for supply chain management and integrity verification via blockchain. Also in this approach the ownership transfer is initiated by the donor (party Ei) through using it's wallet DWi. To do so, it needs to prove the ownership of the physical item and provide instructions to transfer the ownership to the beneficiary (party Ef). Therefore, as outlined above, digital representations cannot be transferred if the current controller of the digital representation (donor) is unwilling or incapacitated to initiate and/or sign the transfer.

US 2022/0366061 A1 discloses chaotic security devices with associated NFTs, wherein a digital transaction may be bound to the authentication of the physical device. Scanning the security device can also be used to initiate or as part of a trade, exchange, transfer, or any other transaction involving the physical asset associated NFTs. However, ultimately a transfer of an existing NFT requires digital consent from the current owner.

EIP 5484 (accessible at https://eips.ethereum.org/EIPS/eip-5484) concerns a special type of non-transferrable NFTs. The owner of such an NFT may want to rotate their keys, in which case it is foreseen to burn the token at the old address and issue a replica at the new address. Such a transaction implicitly requires the digital authentication of present owner of the NFT; otherwise, fraud would be trivial. Other means for authenticating the request for this transaction are not disclosed.

It is an objective of the present invention to provide a method that enables convergence of ownership of a physical item as well as its digital representation by empowering the physical item to govern ownership of its digital representation. That is, in a logical sense, access to the physical item is a necessary and sufficient condition to claim ownership of its digital representation.

To meet this objective, the invention proposes a method as defined in the outset and comprising the following steps:
obtaining proof of access to the security device by performing a measurement of a physical property of the security device,
transmitting the address associated with the beneficiary in connection with the proof of access to a trusted authority,
performing an atomical reassignment of the digital representation to the address associated with the beneficiary responsive to authenticating the proof of access by the trusted authority.

The physical item may be uniquely identifiable. The security device may be any physical device or element that is difficult to counterfeit, i.e. that has at least one physical property that cannot easily be replicated on another, forged security device precisely enough that the difference between the physical properties of the original security device and the forged security device are inaccessible to the type of measurement foreseen in the present disclosure. The security device (alone) need not be uniquely identifiable (although this property may contribute to the security device being difficult to counterfeit). A hard-to-counterfeit security device (e.g., Rare Earth, presence of Taggents, surface structures, ...) in combination with an identification feature, such as for example an identifier contained in a QR code, the serial number, a Barcode, or an RFID chip, may be sufficient to identify a physical object in a verified and practically unique way.

The cryptographic addressing system may be capable of addressing digital accounts controlled by a pair of public and private keys as well as digital accounts controlled by a computer program. The computer program may be defined in a secure and public manner and may be cryptographically linked to its own address.

In general, some type of connection or association between the address of the beneficiary and the provided proof of access is important within any embodiment of the present disclosure. It is this connection or association that provides the legitimacy to the reassignment of the digital representation to the beneficiary. Therefore, preferably this connection or association with the secured by technical means, such as transmission in a data package, the integrity of which is cryptographically confirmed, or by using other means of cryptographic associations between the two entities (the address and the proof of access), such as a common (unique and temporary) key or session linking the two together. This connection or association is an important differentiation over the prior art. In situations where the proof of access or similar means is used as one of multiple conditions to authorise the transaction of the digital representation, where the digital consent of the current owner is another condition, the identity of the beneficiary and thus it address will be confirmed together with the digital consent of the current owner, such that it is not necessary for a trusted authority that authenticates the proof of access to be aware of the beneficiary or its address.

The present disclosure can enable use cases where it is desired to map the physical ownership or accessibility to the digital world in a 1:1 manner. Changes in accessibility, e.g. by transferring the physical item to e.g. a different person or entity (the beneficiary), the digital representations can be transferred from the original owner (the donor) to the beneficiary as well - preferably in an automatic or semiautomatic fashion. The idea is that whoever controls the physical item also controls the digital item. Consequently, digital representations need not be transferrable to different persons or entities independently of the physical item. But transferring the physical item can - in an automated or semiautomated fashion - also transfer the control of the digital representations of the physical item.

Furthermore, ownership, possession, control and similar concepts can be maintained over all digital applications, existing and future ones. Whoever has access to the physical item may control all its digital representations. This also implies that the physical supply of items corresponds to the digital supply of corresponding representations, hence creating scarcity in the digital space which has a strict upper bound matching the physical supply. Each physical item can be conceptually represented once (or in multiple differing digital representations all bound to the same physical item) in the digital world, but not every physical item needs to be mapped. Finally, by establishing a strict binding between a physical item and its digital representation(s), a digital representation becomes an integrated part of the physical item which can be utilized, hence allowing the physical item to also have digital features, effectively making it "phygital".

According to a first variation of the present disclosure, the atomical reassignment may optionally comprise: invalidating the digital representation held by the donor, and reissuing a corresponding digital representation (a replica) to the beneficiary. Invalidating the digital representation may include revoking or destroying ("burning") or otherwise rendering or marking as unusable or invalid the digital representation.

According to a second variation of the present disclosure, the atomical reassignment may comprise a transaction from the donor to the beneficiary. Such a transaction may not require the (digital) consent of the donor. Hence, this variation is feasible only in systems where a third party can be given permission to transfer and reassign the digital representation of the half of - and potentially to the disadvantage of - the donor. The permission to the third party may be given by the donor or it may be an integral part of the digital representation, i.e. which may be enshrined upon creation ("minting") of the digital representation.

The digital representation and the corresponding digital representation both may be cryptographically associated with an item identifier, wherein the item identifier is associated with the physical item, preferably uniquely associated. Such a cryptographical association may be achieved by a cryptographic hash function. It is sufficient if the cryptographical association can be verified only in one direction, e.g. only someone who knows the item identifier may be able to verify that a given digital representation is indeed associated with that item identifier. It is not necessary, and some use cases indeed undesired, that the item identifier can be deducted from the digital representation.

Authenticating the proof of access to the security device may comprise retrieving the item identifier. More in detail, an authority capable of verifying the proof of access may have access to a database, which stores associations between security devices or their respective physical properties the one hand and item identifiers of the physical items, to which the respective security device belongs, on the other hand. More in general, it may be foreseen that the item identifier can be determined based on the security device or any subset of its physical properties.

Receiving the address of the beneficiary in connection with the proof of access to the security device may comprise receiving the item identifier, wherein authenticating the proof of access to the security device is limited to the security device of the physical item associated with the item identifier. Alternatively, the item identifier may be secured and unavailable to anyone outside a trusted authentication service. In those cases, the digital representation may be a one-way mapping from the item identifier, such as a cryptographic hash, as also described above.

Optionally, the donor and the beneficiary are digital accounts in a public distributed ledger, the digital representation is a non-fungible token, preferably a non-transferrable non-fungible token, tracked by the public distributed ledger, and the atomical reassignment of the digital representation is implemented by a smart contract deployed on the public distributed ledger. more specifically, the present disclosure may be implemented on the Ethereum block chain.

Correspondingly, the present disclosure also concerns a system for reassigning a digital representation of a physical item from a donor to a beneficiary, wherein the physical item comprises a security device, the system comprising:
a sensor,
an authentication service provided by a computer system, and
a smart contract deployed on a public distributed ledger,
wherein the sensor is configured to perform a measurement of a physical property of the security device,
wherein the authentication service is configured to receive the measurement as a proof of access to the security device in connection with an address in a cryptographic addressing system, to determine a digital representation of the physical item based on the proof of access, and to transmit the received address and the digital representation to the smart contract responsive to authenticating the proof of access,
wherein the smart contract is configured to, based on the address and digital representation transmitted from the authentication service, perform an atomical reassignment of the digital representation to the address.

Finally, the present disclosure also concerns a computer program product for reassigning a digital representation of a physical item from a donor to a beneficiary comprising instructions which, when the program is executed by a computer participating in a public distributed ledger, cause the computer to carry out the steps:
receiving a message from an authentication service, the message comprising the digital representation and an address in a cryptographic addressing system,
cryptographically authenticating that the authentication service is a trusted authentication service (e.g. by determining that the authentication service is identified in the computer program product as a trusted authentication service),
performing an atomical reassignment of the received digital representation to the received address.

The computer program product may in particular be a smart contract deployed on a public distributed ledger, for example in the Ethereum block chain.

To avoid repetitions, the optional features described in this disclosure with respect to the disclosed method to also apply analogously to the disclosed system and the disclosed computer program product, where suitable.

Invalidating the digital representation held by the donor may comprise: revoking or burning the non-fungible token comprising the digital representation held by the donor. for example, the smart contract may be capable and authorized to revoke or burn any non-fungible tokens previously minted by itself.

In one embodiment of the present disclosure, the donor is not authorized to invalidate the non-fungible token, and preferably only the owner of (or one or more operators defined in) the smart contract, which is different from the donor and the beneficiary, is authorized to invalidate the non-fungible token.

The trusted authority may be the owner of (or one of the one or more operators defined in) the smart contract. The trusted authority, which receives the proof of access together with the address of the beneficiary, can thus operate the smart contract as a function of its own determination of the authenticity of the provided proof of access.

The trusted authority may store reference characteristics of the security device and perform the step of authenticating the proof of access to the security device based on the reference characteristics. Reference characteristics may in particular be the results of reference measurements that have been performed during registration of the security device at a trusted authority, as well as acceptable levels of measurement errors or other changes over time that shall be taken into account in authenticating the provided proof of access in the form of a measurement of the physical property of the security device.

The security device may be an optical security device. For example, the security device may have optical characteristics, such as colour or brightness, that change with the viewing angle. It may comprise a hologram or similar material having optical effects that depend on the viewing angle. It may be also be a security device with optical characteristics that are stochastically determined during its production and cannot be replicated intentionally with reasonable effort. It may also comprise a three-dimensional structure, which is difficult to replicate exactly, such as a three-dimensional pattern. The optical security device may comprise one or more optical variable devices (OVDs). It may be an illumination-dependent optically variable security device, e.g. showing different images dependent on the direction and/or spectrum (e.g. colour or principal wavelength) and/or coherence of the incident illumination.

The proof of access to the security device may comprise one or more optical features of the optical security device, wherein the method may comprise capturing the one or more optical features with a camera. The optical features may be particular images, patterns or colours reflected or transmitted by the optical security device. The capturing with a camera corresponds to the measurement of the physical property, which is the particular, local (and potentially wavelength -dependent) reflectivity or translucency of the optical security device.

Referring now to the drawings, wherein the figures are for purposes of illustrating the present invention and not for purposes of limiting the same,
fig. 1 schematically shows a transfer of a digital representation of the physical item according to a first embodiment of the present disclosure;
fig. 2 schematically shows a sequence diagram indicating the steps during registration of a physical item, during first assignment of a digital representation thereof, and during reassignment of that digital representation according to a second embodiment of the present disclosure;
fig. 3 schematically shows a transfer of a digital representation of the physical item according to the second embodiment of the present disclosure; and
figures 4 to 6 schematically illustrate different variations of use cases for the digital representations according to the present disclosure.

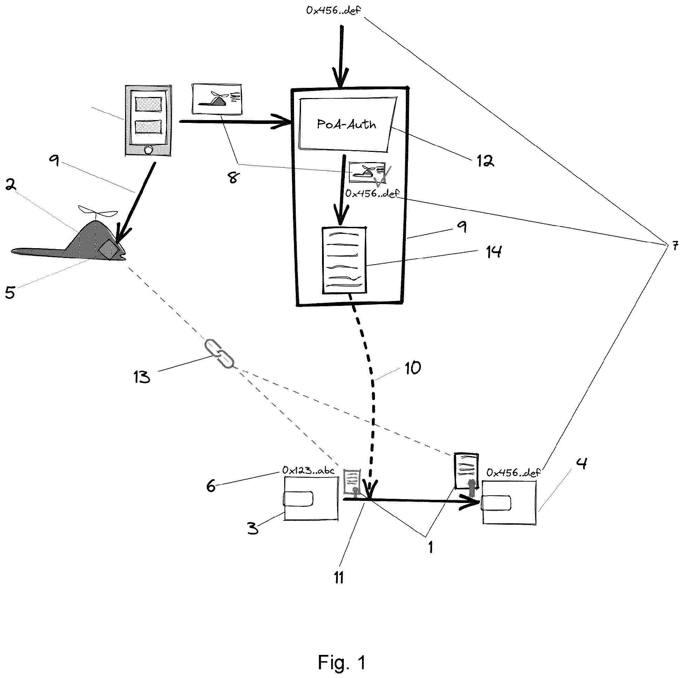

Figure 1 shows a first embodiment of the present invention. The system and method can be used for all physical items (2) which have security device (5) that is reasonably hard to counterfeit and preferably capable of uniquely identifying the physical item (2). The security device should further be of a nature suitable that the physical presence or proximity to a sensor measuring (9) the at least one physical property of the security device (5) in a way, so that an authentication (12) of the proof of access (8) can be executed by the Trusted Authority (9). Responsive to respectively under the precondition of a valid and authenticated Proof of Access (8) (confirming e.g. physical presence of the security device (5) to a sensor or device acting on behalf of the beneficiary account (4) owner), at least one reassignment (11) according to a smart contract (12) is triggered on behalf of the beneficiary account (4). The smart-contract (12) further limiting the use of the digital representation's (1) transfer-function to "issuer only", i.e. the donor (3) account cannot initiate any transaction, only the smart contract (12) can. In this embodiment the at least one reassignment (11) makes at least one digital representation (1) according to the smart contract (12) available to the beneficiary (4), without any account (3,4) needing to consent. Typically, the smart-contract may have functionality stating, that the issuing of the digital representations (1) to a beneficiary (4) is done under several conditions. Through the smart-contract (12) the digital representation (1) can be reassigned at any time, for example by either revoking, transferring, destroying ("burning") or any other suitable method. Pictured in Fig 1 is an atomic reassignment-method, where only the smart-contract is allowed to perform (10) a transfer (similar to a regular transfer of NFTs) from a donor (3) account to beneficiary (4) account. No other account (3,4) may perform a transfer of the digital representation (1).

The trusted authority (9) allows code execution in a centralized or decentralized infrastructure based on identification of a physical security device (5): Execution of a pre-defined immutable segment of program code based with one or more parameters defined by the physical item based on its or the security device's features, detected additional features (e.g. color of a physical item), features stored in a database (centralized or decentralized) accessible through the unique security device identifier, aiming to trigger a transaction on behalf of a beneficiary (4), which is received as a parameter, according to the claim contract (12). The pre-defined immutable segment of program code is executed on a programmable device which may be the programmable device (15), a separate programmable device or any other means suitable to store and execute a pre-defined immutable segment of code when triggered by a performed verified identification. Implementation details like the means for code-execution, include polling e.g. a list of verified identifications, running a bot, server-cluster or and are of non-crucial nature to the method and system proposed by the invention. The trusted authority provides authenticating the proof of access (8), resolving measurements, security device IDs and other data points to a digital representation ID. In a preferrable embodiment it comprises or controls at least one smart contract (12).

The smart contract can be understood as a piece of immutable code that defines the characteristics of digital representations (1) bound (13) to a physical item (2) as well as any constraints and atomic reassignment (11) policies concerning the digital representations (1). Based on the defined rules and characteristics it performs (10) creation (20) of digital representations (1) and performs atomic reassignments (11) of digital representations (1). It can namely but not only define
- Traits and capabilities
- Which physical properties (traits) are transformed into virtual properties, e.g. detected color of a sneaker.
- Which purpose the digital representation will have (see use cases below)
- How many digital representations (1) can exist per account, per physical item (1), per purpose etc.
- Means to provide or means to deposit funds for transactions
- Means to trigger transactions (9)
- Definition on how an atomic reassignment (11) is performed (10) in general or for a specific use case or purpose, e.g. "transfer with issuer-only policy", "airdrop & burn with issuer-only policy", ...
- Diverse utility functions to retrieve, process or evolve digital representations created from the contract.

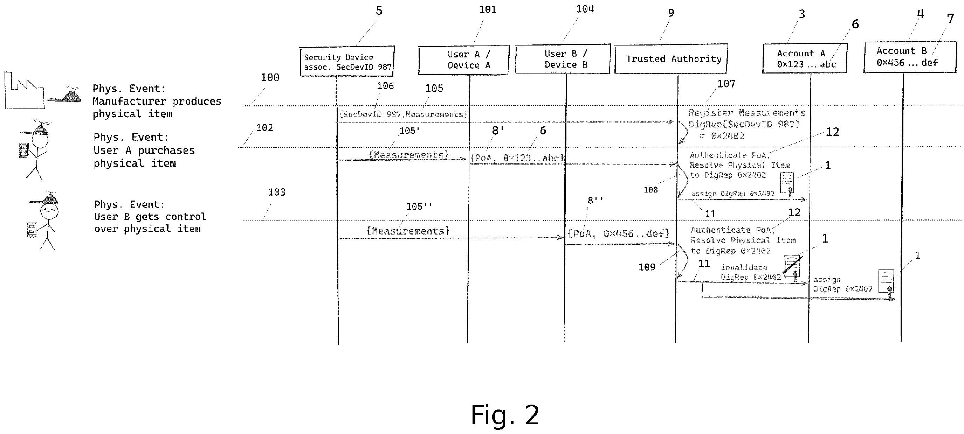

Fig 2 outlines the steps over the lifecycle of a physical item (2) comprising a security device (5) from its time of production (100), purchase of the physical item by a User A interacting with the system via a device A (101), who purchases (102) the physical item (2) comprising a security device (5) and also claims the associated digital representation (1). The physical item (2) later (103) being controlled by a User B interacting with the system via a device B (104), who also claims the associated digital representation (1).

At the time of production (100), a manufacturer equips the physical item (2) with a security device (5). The measurements (105) of the security device (5) together with an SecurityDeviceID 987 (106) are sent to the Trusted Authority (9). The Trusted Authority (9) registers in a procedure (107) the measurements (105) in a way, such that matching Measurements (105', 105") allow to conclude on the SecDevID 987 (106) as well as establishing a deterministic but non-reversible hashing of the SecDevId 987 (106) to a Digital Representation ID 0x2402.

The digital representation (1) allows an account (4) to make use the digital representation (1) in a software application (30,31) directly or trigger further transactions in order to create application specific, derived digital representations (32,33). A digital representation (1) can be of any technical format that is suitable with the DLT technology used for implementation. Namely but not only:
- ERC-725 claim in connection with an Ethereum account.
- EIP-5484 "soulbound tokens" in any Ethereum compatible DLT, whereas the token is issued into the account and is non-transferrable (hence "soulbound").
- As a smart contract call where digital representations are configured as variables. (commonly referred to as "registration")

Each digital representation (1) is fit to be used as proof of possession/ownership due to it being strictly bound to the physical item (2) via the security device (5).

Each digital representation (1) must contain a reference to the physical item (2) respectively its associated security device (5) in suitable form (e.g. a serial number, object ids from an object database used to look-up the identifying features to object-ids, hash of the identifying features of the physical item, ...). It is advisable to not use the measurements (105) of the at least one physical property of a security device (5), a security device id (106), the ID of the physical item (2) or any other datum, which may allow to identify the physical item (2), directly in the digital representation. This makes the system vulnerable to attacks, i.e. spoofing the authentication of the proof of access, guessing IDs (oracle attacks), compromising the complete system if the Trusted Authority is compromised etc.

To illustrate the vulnerability we need to consider that all data on a distributed ledger is public. In the least preferrable embodiment, the identifying features of a physical item (e.g. its Serial number) are used as a Digital Representation Identifier. We consider that a particular account holds digital representations (1) associated with five different physical items. Due to the nature of DLT and known through the digital representations it is public knowledge, which digital representation has the highest value. Hence, a smart fraudster or burglar would browse through a DLT and identify the digital representations (1) with the highest values. If it is possible to conclude from the highest valued digital representation (1) on the physical item (2), i.e. the most valuable of the five physical items, it is easy for the fraudster or burglar to target this particular item.

Additionally, within the Trusted Authority, multiple services may authenticate each other using Public-Key cryptography or similar means. In such cryptographic systems, compromising the private key typically compromises the complete system, hence would compromise the complete Trusted Authority. It is best practice for Web3-applications, that even if the account (not pictured) controlling the smart-contract (hence the owner, typically the Trusted Authority) is compromised, it shall not be possible to guess Digital Representation IDs. One implementation to prevent such vulnerabilities is the following: Whenever manufacturers report e.g. the production of a physical item (2) comprising a particular security device (5), the ID (106) of said particular security device (5) is added to the set of known security devices within the Trusted Authority (9). The set of typical authorities typically stored only offline, so that the set of known security devices cannot be compromised when the Online/Operating part of the Trusted Authority (9) is compromised. The IDs preferably further being hashed or mapped deterministically to a randomized larger set of numbers. The set of known (hashed/randomized) IDs then computed into a so called Merkle-Tree (or similar structures). A Merkle-Tree being characterized that when the smart contract (12) retrieves a digital representation ID, it is easy to verify if that ID was present at computation of the Merkle-Tree, i.e. it is a known ID. However, from the Merkle-Tree, no ID can be reconstructed, neither the hashed ID and especially not a plain ID when hashing was applied. The Merkle-tree is deployed to the DLT, i.e. the blockchain. The smart-contract is configured to validate each input, i.e. the digital representation ID it should reassign to the beneficiary, against the Merkle-Tree.

At a later time (102) User A purchases the physical item (2). In order to also claim the associated digital representation (1), User A, initiates a measurement (105') of a physical property of the security device (5). This measurement is used to determine a Proof of Access (8'). In a typical setting, User A is the beneficiary. User A (101) would also control Account A (3), hence - additionally to the Proof of Access (8') - provides Account A's (3) cryptographic address (6) to the Trusted Authority (9). In a procedure (108), the trusted authority authenticates (12) the Proof of Access (8) through suitable means. Upon successful authentication, it is established that User A via Device A (101) has a Proof of Access (8') to the security device (5) associated with SecDevID 987 (106). Responsive to / under the precondition of a successful authentication the Trusted Authority (9) performs an atomic reassignment (11) with the effect, that the beneficiary, in this case Account A identified via cryptographic address 0x123..abc (6) receives a digital representation (1) identified via Digital Representation ID 0x2402, which is (known only to the Trusted Authority (9) bound (13) to SecurityDeviceID 987 (106).

At a even later time (103), User B (104) acquires the physical item (2) comprising the particular security device (5) with SecDevID 987 (106) from User A (101). In a typical setting, User B (104) also controls the Account B (4), hence making User B via Account B the beneficiary (4) and the previous owner User A via Account A the donor (3). User B via Device B (104) initiates a measurement (105") of a physical property of the security device (5). This measurement is used to determine a Proof of Access (8") and since User B (104) also controls Account B (4), it transmits - together with the Proof of Access (8") - Account B's (4) address (7) to the Trusted Authority (9).

In a procedure (109), the trusted authority authenticates (12) the Proof of Access (8") through suitable means. Upon successful authentication, it is established that User B via Device B (104) has a Proof of Access (8") to the security device (5) associated with SecDevID 987 (106).

The Proof of Access (8) is established by a method or service resolving the measurements (105) to a uniquely identifiable security device ID, hash or similar identifier (10) to identify the security device (5) in a verifiable manner for the proof of access. The Proof of access authentication (12) being characterized in that there are systems, devices and/or methods employed that it can ensure beyond reasonable doubt that a digitized form of the security device (5) based on the at least one measured (9) physical property (105) are indeed captured from the physical security device (5) attached to the physical item and no spoofing or fraud occurred in order to create a false proof of access (8) aiming to fraudulently initiate a transaction on behalf of a beneficiary (4) without actually having access to the physical object (2) comprising the security device (5).

A security device comprises physical features suitable to establish a verifiable proof of access (8) of the programmable device (15) to physical item (2) comprising said security device (5). This may be dedicated markers (of active or passive nature) or the physical items native features partly or in full.

Typically, the claim contract (12), and consequently the digital representations (1) are controlled by a Trusted Authority (9), often the manufacturer or any other entity which has control over the issuance of the physical item (2). Consequently, any type of security device (5) can be chosen, which are suitable to enable a unique identification and verifiable proof of access of the physical object (2) comprising a security device (5) within the universe of the controlling entity. Verifiable means, that there is a system and/or method employed which can establish beyond reasonable doubt, that the security device (5) respectively the measurements of the physical property of the security element (5) has been captured (9) through a programmable device (15), which - in a typical setting - is also used to specify the cryptographic address (7) of the beneficiary (4).

The programmable device (15) maybe for example a smartphone, web cam, computer, integrated circuit, sensor able to execute software, ... In fact any device being able to directly or indirectly (e.g. via a connected electronical sensor) can capture respectively measure and digitize the at least one physical property of the security device (5) of the physical item (2). In addition or alternatively may be configured to resolve identifying features of the security device (5), hash of the measurements or other means to get to s Security Device ID (106). In addition or alternatively it may further be configured to conduct a proof of access (8). In addition or alternatively it may be configured to act as a Trusted Authority (9), hence perform (10) atomic reassingments (11) of digital representations (1) on behalf of a beneficiary (4).

Typically, the means for verification respectively authentication (12) respectively the chosen system and method depend on the fraud scenario. In common use cases, where the present disclosure may be employed, a fraudster will likely try to claim physical ownership / possession respectively fraudulently create a proof of access (8) without actually having access to the physical item (2), hence is unable to capture (9) its security device (5). A typical attack would be to employ stealing / phishing or any other method to fraudulently acquire measurements (105) of the at least one physical property of the security device (5) and try to inject it into a fraudulent proof of access (8) in order to fraudulently make a digital representation (1) available to the fraudster's account, without actually having access to the physical item (2). Note that the invoke of the claim contract (12) cannot be easily attacked if implemented and secured properly by standard information technology means (VPN, encryption, certificates, smart contract controlled by wallet of Trusted Authority, ...).

Hence, any system and method which can establish beyond reasonable doubt that the measurements of the physical properties of the security device (5) have been captured from the physical security device (5) via a programmable device (15) can be used.

Alternatively, there may be use-cases where also the programmable device (15) is trusted, i.e. controlled by the Trusted Authority (9). In such a scenario, the Trusted Authority (9) also controls the physical item (2) and/or its digital representations (1). In such a scenario, a fraudster will try to execute presentation attacks, e.g. display a fake security device (5'), which are then captured (9) by the programmable device (15). Hence, a technology should be chosen, which prevents presentation attacks beyond reasonable doubt. Returning to the human example making a human being to the physical item (2), one possible security device (5) would be facial features, fingerprint, iris features etc. Therefore, it either should be controlled physically, e.g. through a security person supervising the capturing process (9) or - more preferably - through technical means (12), e.g. liveness detection, ... that no presentation attacks are carried out.

Additionally or alternatively, features can be used, which are hard to reproduce or irreproducible, such as random structures, taggents, 3d features authenticated by optical means, special inks, special fibres or materials, etc. The nature of the security device (5) and capturing means (6) is flexible, as long as the presence of the physical item (2) comprising the security device (5) while measuring the at least one physical property of the security device (5) can be established beyond a reasonable doubt. We will outline below certain technologies fit for the task:
- RFID or better NFC (with cryptographically secured chips which are hard to reproduce)
- Random optically variable devices
- Depending on the use-case: Random printed structures or barcodes with randomized and signed numbers. Note that in this case the identifying features need to be considered a secret, printed structures can be copied and if done well, cannot be distinguished from the original
- Chemical or physical processes, e.g. detecting the presence of taggents that allow to uniquely
- Any combination of means, e.g. also a printed serial number in combination with an irreproducible security feature may do.
- Using biometric or pseudo-biometric features (e.g. growth rings, ..)
- Using inherent properties of the object, e.g. surface texture, eventually in combination with a 3D scan using sonar, light field imaging
- Electronical connections, e.g. USB-Dongles, Microprocessors ..
- Electromagnetic communication (e.g. Bluetooth)
- Advanced imaging such as Roentgen, CT, ...
- Chemical analysis (e.g. C-14 method), often in combination with other identifying features
- DNA (sequentialized)

In general, both, marker-based (QR-Codes, RFID, NFC, ..) and marker-less (biometric features, surface texture, ..) approaches are suitable for the task.

The Security Device measurement means (9) may be means and methods suitable to capture respectively measure the at least one physical property of the security device (5). Among others, this includes optical sensors, electromagnetic sensors, direct electrical connection (e.g. USB-dongles), infrared, ultra-violet, sonar, roentgen, chemical processes with quantifiable output or any combination of capturing means. The output of the capturing means (or their combination) is a digitized set of measurements (105,105',105"), which is used to obtain a verifiable proof of access (8).

Note that the measurement or capturing means can also be used to capture additional physical properties of the physical item (2) or the security device (5), which may be transformed into additional properties or characteristics in the digital representation (1). For example, the color of the physical item (2) may be captured and transmitted to the Trusted Authority (9) for embedding into the digital representation (1).

Exemplarily, one may implement a system and method according to e.g. EP 3632075 B1, which proposes a system and method to manage privileges based on the authentication of an unclonable security device. In their language, such a system would be employed to identify and authenticate (=verify) a physical item, which conceptually links at least one programmable device comprising a camera (5) to the physical item - in this case via optical capturing means (6). This link then privileges the programmable device (15) or any service connected through the established link to through the programmable device to the physical item (2) to invoke either directly or indirectly via any information technology middleware (e.g. servers, proxies, services, ...) the claim contract (12).

Note that - as outlined in the Rosetta-Stone example below - it may be beneficial for certain use cases to combine multiple different security device (5) and capturing means (6) for one identification. However, it there may be use cases, where the same physical item (2) is equipped with multiple different security devices (5), where each of the security devices (5) has a different security device ID. Yet all different security device IDs can be mapped to the same Digital Representation ID, either directly or indirectly by introducing a physical item ID. Each of the security devices (5) is suitable to establish a verified proof of access to the physical item (12) independently of each other. For example, an object may be equipped with an NFC chip which is captured by electronic means (9) as well as a security device according to EP 3632075B1, which is captured by optical means (9'). This may be a reasonable approach, if different classes of programmable devices (15) are used, where not all of them share the same capturing means. Also, NFC is e.g. suitable for bulk-reading, while optical security features often are not. In such scenarios it is of utmost importance to resolve the two independent security device (5) to the same digital representation ID.

In general, it is strongly advised to not use the security device (5), its measurements, associated IDs or otherwise related or mappable data directly as digital representation identifiers. Digital representation identifiers will be publicly in the digital representation (1). A Fraudster would just look up the object-ID (which corresponds to the security features in that unfavorable setting) and try to inject it into the identification verification service to trigger a fraudulent claim. This also implies, that the identification-verification system is preferably implemented as a closed, non-impregnable infrastructure and identification features in general are treated as a secret. Alternatively, cryptographical means such as zero-knowledge protocols, public-key cryptography etc. may be used to secure a half-public or public system.

Depending on the use case, digital representation identifiers may - among other methods - be acquired by
- Resolving the measurements to digital representation identifiers via a decentralized or centralized data base
- Hashing of the measurements or a subset thereof.
- Cryptographic hashing of the physical item id or the security device id in general, preferrably aventually adding a secret "salt" before hashing. This has the benefit that - without any central authority - a globally unique and unguessable ID is generated with a very low probability of colliding with any other ID. If a traditional object ID, such a serial number is used, it is very likely that the Serial number #1 exists for almost every universe.
- Use GTIN-like, IMEI-like, UID-like globally unique IDs.

While it is not necessary to create globally unique IDs (since they only need to be unique within the universe in the scope of the claim contract (12)), it is advantageous to use globally unique IDs, as this favors interoperability and makes it easier to expand the system and onboard new stakeholders / physical products etc., that may not even be manufactured by the controller of the claim contract.

Note that - regardless of how the Object-ID is generated from the security device (5) - it needs to be a deterministic and repeatable process, such that the same security device (5) is guaranteed to resolve to the same Object-ID.

Coming back to fig. 2, in an atomic reassignment (11), the Digital Representation identified as 0x2402 (1), is reassigned (11) from the donor Account A (3) to the beneficiary account B (4).

It is noteworthy, that Device A and Device B may be the same device, maybe even operated by the same User. However, for the two claim events it is configured differently, namely to transmit a different account address as the beneficiary address (7).

To further illustrate the flexibility of the system, it is worth to consider that User A and/or User B may obtain the proof of access (8) using their respective programmable devices (15) but may specify as a beneficiary an account (4), which is _not_ controlled by themselves, hence initiating the atomic reassignment (11) on behalf of a foreign account. This is valid, since the party able to obtain an authenticated proof of access (8) can specify any account (3,4) identified by a cryptographic address (6,7).

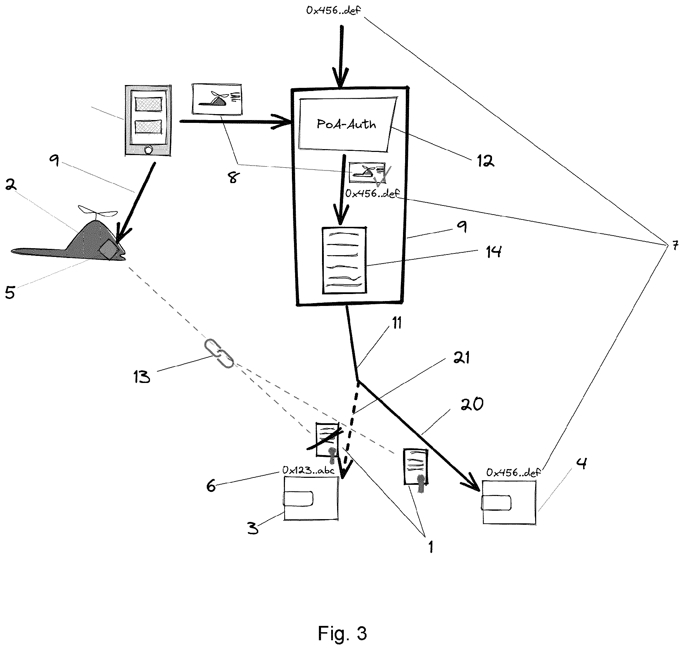

There are other methods available to achieve an atomic reassignment (11), which all have different benefits and disadvantages when it comes to flexibility, security, and cost. Therefore we recommend to choose a way of implementing the revoke mechanism in an optimized way. Below we discuss two methods in order to illustrate the considerations one shall take into account in implementation, as illustrated in fig. 3.

In the embodiment according to Fig 3, the digital representation (1) is implemented as so called "soulbound token" according to EPI-5484. Here, the smart contract (12) is configured to disable the "transfer" method. The "burn" method is configured to follow an issuer-only policy. Eventually, the burn method can also be configured to allow Issuer and Owner, which also allows the currently holding account to burn the digital representation (1). This has the benefit, that if an account does no longer want to hold the digital representation (1), it is disposable.

In any setting, the issuing smart contract (12) is entitled to perform the burn-operation (21) of digital representations (1). Especially using burn-transactions (21) through the smart contract (12) requires minimal CPU cycles and blockspace, hence having very low gas fees - which is a clear benefit over implementing it as regular a burn-transaction, i.e. transferring the NFT to a dedicated burn-address. Additionally, as mentioned, in such a setting the funds to cover gas-fees can be made available through the smart contract (12) and do not need to be reserved or provided through any of the involved account.

This may be implemented similar to a "Soulbound-token" according to EIP-5484 as outlined in the previous preferred embodiment. Using a direct transfer method over the "airdrop (20) & burn (21)" approach to transfer digital representations (1) has two advantages; only one transaction is needed (minimize gas fees) but more importantly, this is particularly beneficial when the digital representations (1) are so called "evolving NFTs" (e.g. https://freeverse.io/). An evolving NFT is characterized to have digitally mutable/evolving properties (e.g. changing the colour of a sneaker in the metaverse, recording played hours using a particular digital representation (1) in-game, operating hours of a certain part in a vehicle, ...). If the physical item is transferred, i.e. a new claim in form of a transaction on behalf of a new beneficiary (4) is initiated, the digital representations (1) shall be transferred with their current state of mutable properties.

At the time of this writing, the EIP-5484 does not allow to restrict the use of the transfer-method to issuer-only, for soulbound-tokens it throws an exception hence making the transfer-method useless. In the future the transfer-method may be restricted in a similar way as the burn-method, namely restricting its execution to the Issuer. In a beneficial setting we therefore propose an addition to EIP-5484 to also allow the restricted execution of the transfer-method. Alternatively, a smart contract (12) may still revoke a first digital representation (1) from a donor account (3) but issue a new digital representation (1) to a beneficiary account (4) with copied attributes. Additionally, the new digital representation (1) may have data on the previous owner, i.e. the donor (3). If the controller of donor (3) is doxxed (Real identity known) this may be very valuable data to collectors, namely if a digital representation (1) states that the physical item (2) has belonged to a celebrity, which is evident since the celebrity controlled the account (3). Naturally, one may argue that transactions in the blockchain can be used to retrieve this information as well, however, this would require all software applications utilizing (and people looking at the digital representation manually) to perform blockchain-lookups. It is beneficial for convenience- and implementation-complexity reasons to embed the record of previous owners, e.g. their account's address (6) into the digital representation (1).

Digital assets (hence, also digital representations (1)) in DLT reflect the concept of ownership or at least the proof of possession. In a legal concept, both concepts allow you to at least partly utilize the digital representation (1). Among others, digital representations (1) can be utilized in software applications (30, 31). In all of the following examples, use cases and embodiments we will illustrate only the beneficiary account (4), as the utilization of digital representations is typically isolated from the atomic reassignment (11) of digital representations (1). Additionally, we will use an illustration of the preferred embodiment from fig. 3, where the atomic reassignment (11) is a combination of an airdrop (20) and burn (21).

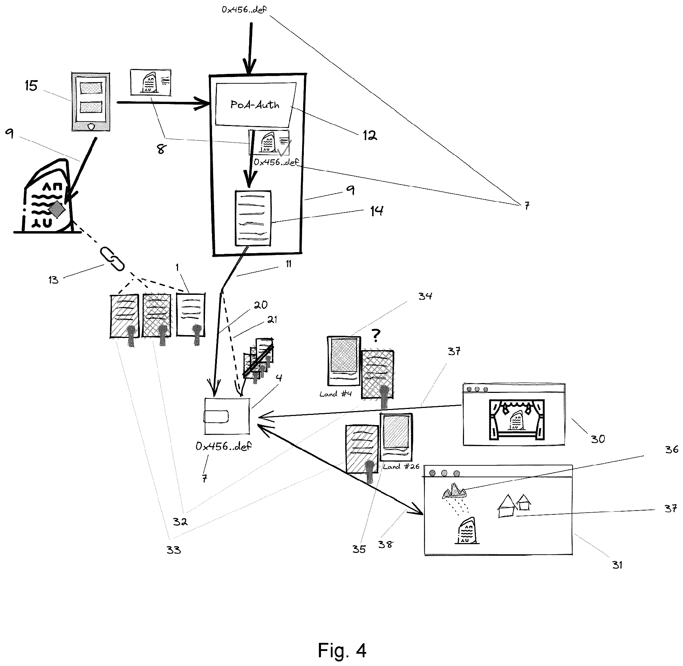

To illustrate a first preferred embodiment according to Fig. 4 we will resort to an example situation where the physical item is the Rosetta-stone, which shall be exhibited in a first software application (30) as well as a second software application (31). We assume that the account (4) is controlled by the legitimate owner of the physical Rosetta-stone (2), e.g. the British Museum. As a means of proof of access (8) it has been agreed that the Rosetta Stone (2) itself is the security device (5), as it comprises multiple suitable physical properties to provide a proof of access in a verifiable way. The authenticated proof of access (8) shall e.g. base on a CT-Scan, a high-resolution picture, and the quantified age according to C-14 method. The measurements of the security device (5) are acquired by at least one programmable device (15) using different capturing means (9). Since the manufacturer of the Rosetta stone is unknown and clearly would not have published a Security Device-ID suitable to be used with the present invention, a suitable hashing-algorithm may be used to compute a unique security device ID from the measurements of the physical properties from the Rosetta Stone (acting as a security device) (2,5). Under the pre-condition of a authenticated (12) proof of access (8), a transaction on behalf of an beneficiary account (4) is triggered by invoking the claim contract (12).

In this preferred embodiment, the claim contract (12) is configured to issue multiple digital representations (1,32,33), all of which are bound (13) to the physical Rosetta-Stone (2,5). Consequently, in the case of a revoke (21), e.g. when the physical Rosetta-Stone (2,5) is transferred and there is a claim on behalf of a different beneficiary, e.g. one controlled by the Louvre, the claim contract (12) is configured to perform an atomic reassignment (11) by revoking (21) all issued digital representations (1,32,33).

Assuming for this example that the British museum owns Land in e.g. three different Metaverses, two of which are displayed as a first software application (30), e.g. Decentraland, and a second software application (e.g. 31), e.g. the Helix Metaverse. Typically (but not only) virtual real estate in such metaverses is implemented as digital assets (34,35). Also, as of today, there is no interoperability-standard established which would - out of the box - ensure that the same digital representation (e.g. 1) can be used in all software applications (30, 31). As an illustrative example, the digital asset Land #4 (34) usable in a first software application (30) comes with traits that you can place assets, which are in a suitable format, i.e. a suitable digital representation (32) compliant with a first software application (30) on a stage. The second software application (31) follows a more immersive approach and owning Land #26 (35) means that you actually own a in-game lot of land which is a 1:1 representation of e.g. a village of Rosette in Egypt (37), which can be developed by the account which holds the Land #26 digital asset (35). Due to the immersive approach, the software application (31) may require that any compatible digital asset, i.e. the particular digital representation (33), needs to be an evolvable digital asset which implements a "rain-on" functionality as well as a related "state-of-repair" attribute (evolvable trait). With this mechanism, erosion due to rain (36) maybe simulated, when the represented object (33) is placed "outside". Over time, the state-of-repair of the digital representation (33) will degrade, when place "outside", e.g. in the village center of the digital representation of Rosette (37).

A typical approach for software applications is to access public information of an account to verify a specific digital asset (32,33,34,35) is owned by the account. In an immersive approach, e.g. with evolvable digital assets, such as the second digital representation (33), the software application may "modify"/evolve the attributes of that particular second digital representation (33). Today this is typically implemented via meta-data traits, however, we want to empathize that the present invention can also be applied if different mechanisms are used.

The preferred embodiment according to Fig. 4 has the advantage of a very simple design, i.e. one claim contract (12) handles all transactions (11, 20, 21). However, this also requires the claim contract (12) to reflect any possible utilization in a software application (30,31) and in consequence needs to define and/or map physical and digital traits for any supported software application (30, 31). This makes the smart contract (12) very hard to maintain and it needs to be updated regularly by the owner. Consequently, the present structure is certainly viable when the physical item (2) shall only be bound to a very limited number of digital representations (1,32,33). This scenario typically occurs when only a single or a very small number of software applications (30,31) shall be supported by the digital representations (1, 32,33). This also implies that the transaction fees (gas fees) for multiple digital representations and their revoke need to be supplied through the claim contract (12). For a scaling approach, where a large or indefinite number of software applications shall be supported, it is unreasonable to reflect the requirements (e.g. capabilities, traits, ...) and funding of each and every software application (30, 31) through the claim contract (12). This embodiment however may be the most efficient (complexity and cost-wise) for a small number of supported software applications.

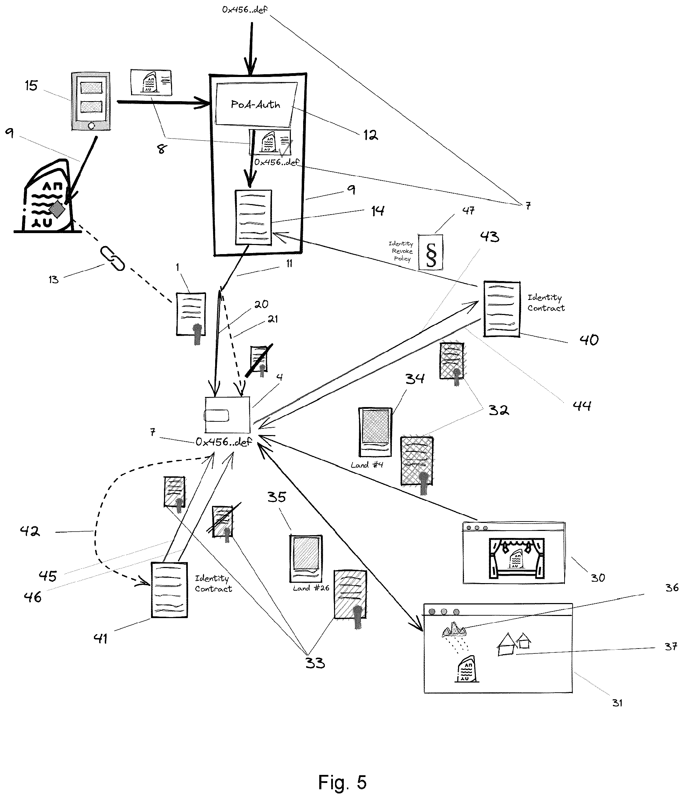

Another preferred embodiment according to Figure 5 addresses the shortcomings that arise, when being used to establish digital representations (1) which shall be utilized by a higher number of software applications. Without going into much detail as the implementational details of the individual components are already known from previous embodiments, we will outline the principal concept of such a structure, its benefit and several different ways how components may interact with each other. We will further use the same concept and interaction with the software applications (30, 31) as in the preferred embodiment represented in Fig. 4.

The key concept is decoupling the digital representation (1) from its derived digital representations (32, 33). The greatest benefit is that the owner of the claim contract does not need to integrate any logic or rules that may be required to utilize a digital representation (1) via its derived digital representations (32, 33) in software applications (30,31). In the following we will outline different possible methods to claim and revoke such derived digital representations (30,31) which are bound to a first digital representation (1) which in turn is bound (13) through the present invention to the physical item (2). Such a structure ensures through any suitable method, some of which are represented in the following, that derived digital representations (30,31) are revoked in a bound manner to revoking the first digital representation (1), e.g. through an atomic reassignment (9) when a new claim on behalf of a different beneficiary account is initiated.

Starting from the atomic reassignment (11) making the digital representation (1) available to the beneficiary account (4), i.e. the claim transaction (20) and any related revoke transactions (21) had been executed, the account (4) now holds a first digital representation (1). For easier comprehension, we will subsequently denote the derived digital representations (32,33), which are bound to a first digital representation (1) as digital identities (32,33), similar to different identities a human being may have through different email-accounts (e.g. a private and a corporate one).

For a first software application (30), a derived digital identity (32) in suitable format is needed. An identity contract (40) is configured such that it issues a digital identity (32) bound to a digital representation (1). The account initiates (43) a "mint" transaction (43) and the identity contract (40) verifies before issuing a digital identity (32) that a suitable digital representation (1) is available to the account. The digital identity (32) is then made available to the account. Note that in this "mint"-transaction (44), the account initiates the transaction, hence is responsible to covering gas fees. In comparison to the Fig.4 embodiment this means, that the account itself needs to have liquidity to create such a digital identity.

The identity contract (40) is further configured to implement a Identity revoke policy (47) which - without going into implementation detail - manages the "Revoke event", i.e. when the digital representation (1) is revoked (11) through the claim contract (12). Revoking the digital representation (1) through the revoke mechanism (11) conceptually may trigger a chain reaction and all digital identities (32) issued by a identity contract (40), which implements the revoke policy (47) get revoked as well. Alternatively or additionally, the revoke policy (47) may be configured to make a digital representation (1) and/or related digital identities (32) non-revokable until certain conditions are met. Refer e.g. DeFi use case and Tractor use-case for details.

Note that other digital identities (33), which are issued from an identity contract (41) which does not implement the revoke policy, are not revoked automatically.

In a different preferred embodiment, digital identities (33) are issued by an identity contract (41) with a similar method as in the claim contract (12). The account invokes (42) the identity contract (41), which is configured to verify that the account holds a suitable digital representation (1) to create a derived digital identity (33). The digital identity (33) may then be made available to the account in an "airdrop"-transaction. Similar, the revoke mechanism is implemented like in the claim contract (12). This has the benefit over the "mint"-strategy followed by the first identity contract (40), that liquidity may be provided through the issuing second identity contract (41), hence no liquidity of the account is required. Note (not pictured), that also a software application (31) can invoke the identity contract (41) on behalf of an account. It is worth mentioning, that - due to the identity revoke policy (47) not being implemented for the second identity contract (41), the digital identities (33) do not get revoked automatically, when the digital representation (1) is revoked. Therefore, the software application (31) needs to implement a suitable mechanism to verify whether a digital identity is still valid. This may be done by verifying that the account holds both, the digital representation (1) as well as the digital identity (33).

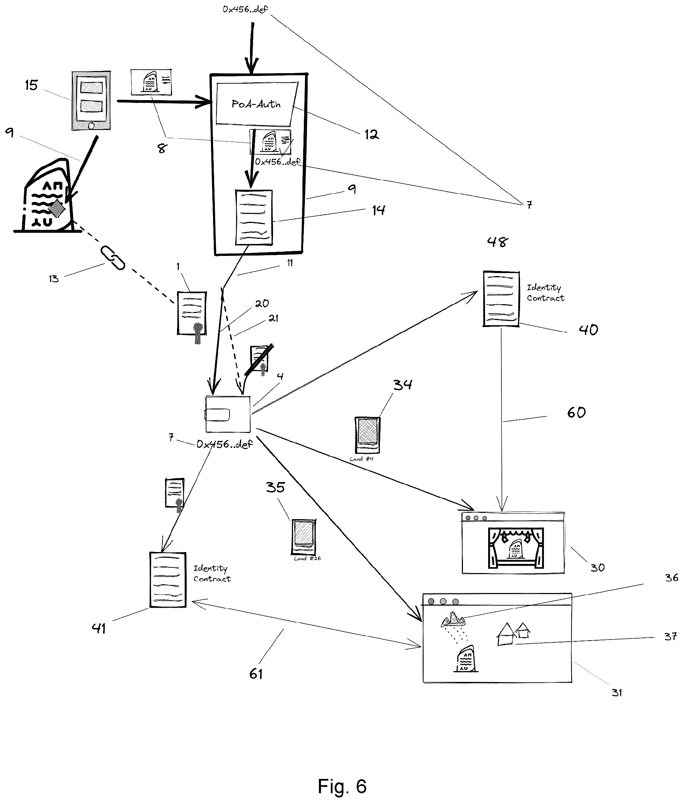

Figure 6 shows a slightly adapted version of the embodiment in Figure 5, where the identity contracts (40,41) are configured to act as a "gasless wallet", essentially being a smart contract - which saves transaction costs and reduces complexity. The application would hence use another form of token or establish the digital identity using a call (60, 61) to an identity contract (40,41), which is configured to store a digital identity in a set of variables. The issuance of such "virtual" digital identities is done by the identity contract (40,41), which may also be configured to issue such "virtual" digital identities only in the case, that the connected account holds the appropriate digital representation (1).

When designing so called dapps (Decentralized Applications, a preferrable setting the current invention can be used for), developers and companies may pay an elevated amount of attention to ecological factors and use cases, when compared to "traditional" Web 2 applications. The design of the system and in particular the design of the methods, code, interfaces, and data structures in e.g. a smart contract (12) have direct impact on the security, transparency, and ultimately operational costs of the dapp. A major factor making this a hurdle for developers skilled in the art of "traditional" Web2 applications being the trustless approach DLTs usually require as well as transaction fees, which often depend on the nature of the implementation. We will in the subsequent paragraphs outline use-cases and economical aspects which may be worth considering in preferrable embodiments of the present invention.

The present invention proposes to bind a digital representation strictly to a physical item, i.e. when the physical item is transferred or ownership, possession (or any other state) of the physical item changes, this is preferably reflected in the digital representation of the physical item in an enforced and preferrable automatic or semiautomatic manner. In particular, the change of control of the physical item may initiate the change of control on its associated digital representation in an enforced manner. Further, we propose to disallow digitally initiating any transfers of digital representations, since a digitally triggered transfer of digital representations can never enforce a physical transfer, hence inevitably resulting in different controllers of the physical item and its associated digital representations. This binding (13) is preferably intact throughout the complete lifecycle of a physical item (2).

This conceptual binding (13) is beneficial for applications where it is desired to anchor the physical item (2) in the digital world as well as reflecting physical status changes and transactions digitally. It further allows to interact, utilize, develop and modify the digital representations (1) of a physical item (2) in e.g. software applications (30, 31) and upon a status change or e.g. ownership change of the physical item (2) also all its digital representations (1) including any digital evolutions and modifications performed while being held and controlled by the donor (3) or any previous controller become - conceptually through the binding (13) - accessible to the new owner, the beneficiary (4) of the physical product. In simple words, the digital representations (1) of a physical item (2) preferably shall not exist, be utilized, be transferred, or otherwise controlled independently of the physical item (2). The controller of the physical item (2) shall always control its associated digital representations (1).

This concept may be very counter-intuitive for people skilled in the art of Distributed Ledger Technology, Web 3 concepts and similar fields. This is primarily due to the fact that we propose a system and method purely controlled through physical transactions. In order to bind these physical transactions to digital transactions of associated digital representations, a trusted authority is employed. In particular, employing a trusted authority in a dapp, i.e. a system using a distributed ledger, which is usually designed as a trustless system, may appear questionable at first.

In particular, in an optional embodiment of the present disclosure, it concerns a system and method to make digital representations (1) non-transferrable, non-creatable and also non-controllable by any account (3,4) holding the digital representation (1). This is counter-intuitive for DLT-applications, since typically a transaction (creation, transfer, burn) is initiated and signed by the donor account (3) currently holding the digital representation (1).

In another optional embodiment of the disclosure, the management (creation, transfer, burn) of the digital representations (1) is initiated by proving access to the physical item (2) on behalf of the beneficiary (4). Conceptually, in such a setting the beneficiary (4) initiates transaction by proofing access to the physical item. However, by design of DLT, in particular those according to the EVM (Ethereum Virtual Machine), the beneficiary (4) cannot initiate the transfer of a digital representation (1). Transactions are typically initiated by the donor (3), i.e. the account controlling a digital representation (1). As outlined, the present disclosure overcomes this limitation through introducing a trusted authority (9) which is (solely) in control over all digital representations (1), which may be held by accounts (3,4), and their transactions. This means that neither the donor (3) nor the beneficiary (4) needs to consent to the transaction, which is controlled by the trusted authority (9) alone. This mainly concerns the creation and transfer of digital representations (1).

Having a Trusted Authority (9) to allow DLT to interact with off-chain data and states, is known from the concept of so called "Oracles". Concerning the present disclosure it is worth considering, that the trustless aspect is still present, namely by allowing any physical state and whoever controls the physical item may lay a claim on its digital representations (1). Hence, the Trusted Authority (9) according to the present invention may be seen as a rather specialized form of an Oracle.

An inherent problem in DLT, where the donor (3) initiates and consents to transactions, is that when the donor is unwilling or incapacitated to initiate and/or consent to a transaction, the transaction cannot be made. In the simplest example the private key of the donor-account may be lost or the controller of a donor DLT account may decease. Since DLTs does not have authorities, it is technically impossible to access any assets controlled by the donor DLT account, without gaining access to said account. In the case of e.g. a deceased person, assets may be frozen forever.

With the proposed method, where access to a physical item controls and performs transactions of digital representations via a Trusted Authority (9), this implies that if the physical item is recovered, the digital assets can be moved from a donor account, which became incapacitated. While this has the disadvantage that there is also no way to protect the digital representations in the case of theft of the physical item, there are several advantages; it is easier to recover a physical object from e.g. a physical vault than to recover access to a donor account, where the means for authentication have been lost. The latter is practically impossible.

Additionally, a major benefit is that digital representations (1) cannot be moved without having access to the physical item (2). DLT technology is very vulnerable for scam, where fraudsters illegitimately gain access to a DLT account and drain it, e.g. by pretending to purchase an NFT but via the smart contract issuing said scam NFT, the donor account unknowingly also signs off on letting the fraudsters account access the donor account. With the present method, where neither the donor nor the beneficiary can initiate the transaction from their accounts, such scams are no longer possible.

Lastly, we want to empathize that with the present invention it is possible in a preferrable setting to protect digital assets, i.e. digital representations (1), by protecting the physical item (2), e.g. by placing it in a vault. Receiving a digital representation (1), where the receiving account, i.e. the beneficiary (4) does not need to consent, is often referred to as "airdrops". This is in contrast to a "mint", where a beneficiary usually needs to consent. Unfortunately, airdrops are also one of the primary attack vectors fraudsters use to drop malicious NFTs for attacks as described above.

However, using an "airdrop-like" mechanism vs a "mint-like" mechanism is a major economical consideration when designing systems and smart contracts. With an "airdrop-like" mechanism, the funding for the transaction is provided through the smart contract (12), while with a "mint-like" structure, funding is provided by the initiating account, i.e. the beneficiary (4). One advantage of a system and method according to the present disclosure, where a transfer is performed through the Trusted Authority (9) and in no way initiated from accounts (3,4) is that neither account (3,4) is required to have liquidity to pay for transactions. Figuratively speaking, the system supports a user creating an account and without depositing any funds, the user can take full advantage of the system and transfer her or his digital representations (1) by physically transferring physical item (2) comprising the security device (5). For example, if the digital representations (1) bound (13) to a physical item (2) shall be transferred to another beneficiary account (4), it is sufficient that the user initiates a measurement resulting in an authenticated proof of access (8) to the physical item (2) on behalf of the beneficiary account (4) and the digital representations (1) may be transferred by means of the present method to the new account - without creating any costs for the user. The liquidity is typically provided by the Trusted Authority (9), in particular through the smart contract (14), the owner of the smart contract (14) or any other account associated to and providing funds through the smart contract (14). Typically, e.g. the manufacturer of physical items or the providers of Proof of Access technology may provide the liquidity, as the digital representations (1) are an integral part of the physical item. Note there are multiple liquidity structures and ways, how transaction costs may be recollected from beneficiaries if the use-case demands it. The invention shall by no means be limited to implementations, where liquidity is provided through the smart contract (14). However, for simplicity and consistence in the detailed description of embodiments we only discuss the structure, where liquidity is provided through the smart contract (14).

Naturally, precautious measures may be taken to e.g. prevent that fraudsters drain the funds of the smart contract (14), which equivalents to a denial-of-service attack by transferring the digital representations (1) among different accounts (3,4) over and over again. This attack may be carried out by obtaining Proof of Access on behalf of different accounts (3,4) in an alternating manner. If the contract is no longer funded, no transactions can be carried out. The simplest counter-measure among many may be to constrain a limit on the number of allowed transactions per physical item, i.e. per uniquely identifiable security device (5) respectively per digital representation id. This may be implemented for example in the Trusted Authority (9) or (preferably) in the smart contract (14).

Digital Representations (1) according to the present disclosure are in one preferrable embodiment used in software applications (30, 31). For such software applications, digital representations may need to be associated - besides the object-id, security-device id or digital representation id - with additional data points. Among other data points, a digital representation (1) may or may not contain or link data or meta-data on
- Which purpose the digital representation (1) has (see use cases)
- Whether the digital representation (1) can be revoked. There are certain use-cases, e.g. the industrial use case outlined below, where a non-revokable digital representation (1) may be required. This means, the first account to acquire a digital representation (1) through a claim contract (12) will hold it until eternity.
- Digital properties (Traits)
   ∘ Certain physical properties may be transformed into digital properties and potentially its derived digital representations (32,33). For example, shoe size, colour, production date of a sneaker.
   ∘ Virtual digital traits, e.g. "fuel capacity", "max speed" of a sneaker, see "flyable" in digital capabilities.
- Digital Capabilities: Definition on how the object can (or must be) used in an application (30,31). For example a sneaker maybe "wearable" and "walkable" but also "flyable" (which is a pure digital capacity as shoes are commonly known to be incapable aviation in the physical world). Digital objects can also be stripped of inherent physical capabilities, e.g. a sneaker may not be "throwable" digitally, if a manufacturing company (e.g. sneaker brand "Nice") wants to prevent that her products are used as weapons in applications such as computer games, metaverse etc.;
- Mutability of digital properties. E.g. the manufacturer of a physical item (e.g. sneaker) may allow to digitally customize the color of the shoes in a metaverse but wants to make the overall appearance / design of the object immutable to e.g. resemble the physical appearance (including e.g. the brand logo);
- Whether creating derived digital representations is allowed or prohibited.

In a preferrable setting, the format of digital representations (1) according to this invention may be standardized, e.g. an ERC or EIP (for Ethereum blockchains) is issued in order to ensure interoperability among stakeholders. In some occasions the digital representation (1) can also serve directly as an identity in an application (30, 31) or can be used in conjunction with an application specific identity as a proof of proximity of the physical item (2). A digital representation (1) can be limited to be redeemed with only one specific wrapping contract (e.g. 40), but usually can be redeemed with various wrapping contracts (40,41). The digital representations (1) itself (but not their properties) are immutable once created, and can only be revoked, transferred or in any other form revoked (from the perspective of the account) through the ways specified as an atomic reassignment (11) in the smart contract (12). Revoking, transferring, or invalidating a digital representation (1) does not automatically revoke the derived digital representations (33,34).

Finally, in the following paragraphs we will outline exemplarily several use-cases, where the present invention may be employed.

### PHYGITAL GOODS IN METAVERSE AND SOFTWARE APPLICATION

Digital representations (1) of physical items (4) can be minted and used in the metaverse and in software applications. As the usage in a "gamified" metaverse was already outlined in several embodiments above, we want to especially empathize the use of digital representations (1) of physical items (4) in a metaverse, which is not purely virtual but actually uses technologies like Extended reality, where the physical and the digital world overlap, i.e. the physical world is augmented with digital contents. This concept can best be seen by wearing smart glasses, which project a digital overlay over a real-world scenario. This can be used to augment physical items or extend the physical world with digital-only content, hence creating a XR-Metaverse, where the digital and the physical world overlap.

Especially in such XR-Metaverses, "temporary" possession of uniquely identifiable physical items (4) may be a central concept, since a person wearing smart glasses (5) should only be able to interact with the digital representation (1) of an item (2) (which may be overlayed in an augmented-reality manner onto the physical item (2)), if it is e.g. in physical proximity or visible to sensors of the smart glasses (5). In such a use case, the temporal physical proximity of the item (2) is of interest. Therefore, the claim contract (12) would be configured to either issue digital representations (1), which has an expiry-date, e.g. is only valid for e.g. 1 hour or - which may be more efficient in terms of transactions - a digital representation (1) is made available to an account linked to the smart glasses (5) once, and the software application (40, 41) handles the physical-proximity issue.

Another - not often discussed - approach, which may contribute to sustainability is that if XR-Metaverses and wearing smart-glasses reach a state of mass adoption, comparable to today's smartphones and social media, packaging of products may become more environmentally friendly by completely omitting the physical design. The packaging or even a physical item itself would only be equipped with a security device (5), and the visual appearance is projected onto the physical product - hence making the digital representation (1), where at least one attribute is the visual appearance of the physical product in an overlay, an integral part of the product design. We want to empathize that for the sole purpose of augmenting a physical-object's packaging a less complex system would be sufficient as well, e.g. each box of cookies will have the same design and a unique and verified identification is not mandatory. However, if the physical product needs to be uniquely identifiable for other purposes, e.g. advanced digital representations (1) comprising digital utility of the object, the product design can be realized through the proposed system and method of the present invention as well with minimal additional effort.

### PHYGITAL TOKEN GATING

A very common application of NFTs is so called "token gating". Owning a token created from a particular smart contract (12) identified via the deployed smart contract's cryptographic address enables certain activities or allows to access certain digital or physical values, assets, or services. Consequently, operating with an account (3,4) holding a digital representation (1) can be used for access control (digital or physical), utilizing or accessing certain services or values physically or digitally or "consume" digital representations in a software application (30,31), i.e. when the digital representation or one of its derived identities is an evolvable NFT. Such a digital consumption could be drinking a virtual bottle of champagne and the digital representation (1) being associated with the corresponding real-life bottle of champagne.

Many software applications (30,31) offer interfaces for token gating. As an example, consider token-gating a virtual property in one of the mentioned meta-verses, for example the immersive Helix-Metaverse, which is for example a 1:1 scale representation of NYC.

Considering a bottle of champagne (2) that comprises a security device (5), for example according to EP 3632075B1. A gamer has connected his account (4) to the Helix Metaverse software application (31). In the software application, the issuer of the champagne bottle (2), e.g. a winemaker from the province of Champagne, recently purchased a high-valued virtual skyscraper. The winemaker decides, that only gamers, who have access to one of the physical champagne bottles (2) respectively their digital representation (1) should be able to enter the virtual skyscraper. The software application Helios Metaverse (31) offers a setting for the virtual skyscraper, where the smart contract address can be entered and all gamers controlling accounts (4) holding at least one token (digital representation) gain access. While this interface is certainly not designed specifically for the present disclosure but rather as a general interface, e.g. to work with PFP tokens such as Bored Apes, the fact that digital representations (1) are NFTs deployed from a specific smart contract (12) allows to use this standard interface to effectively gate the access to a virtual skyscraper in a software application (31) through a physical bottle of champagne. If a user loses control over the bottle of champagne, e.g. throws it a way and a dumpster picks it up and claims, the user also loses access to the virtual skyscraper. By having "access to the virtual skyscraper when having access to the physical champagne bottle" as a product feature, even the empty physical bottle of champagne maintains some (digital) value and may be kept as a collectible - effectively increasing the market value of the winemaker.

Note that for standard token gating interfaces, the content or traits of the digital representations (1) are typically not evaluated. Hence, when designing digital representations (1) for standard token gating applications, the atomic reassignment (11) shall be configured in a way, that the digital representation is completely removed from the account (3,4) instead of invalidated e.g. via an expiry-date.

Alternatively (and transaction-efficient) the software application Helix-Metaverse (31) allows to check for the trait "expiry-date" of a digital representation (1) and handles the invalidity-mechanism separately.

Alternatively (and maybe the best trade-off between transaction-efficient and complex/ minimally collaborative in implementation) a gasless wallet as in fig. 6 is used, which has an identity contract (41) which issues a "virtual" digital identity (61) only under the pre-condition, that the expiry-date of the digital representation (1) is not reached. This allows a flexible implementation, since the identity contract (41) can be controlled by Trusted Authority and a minimum on transactions, since a gasless wallet is used.

In nearly all token-gating applications, it is preferrable to deploy one smart contract (12) per product or even one smart contract per batch, e.g. a separate smart contract for 2018 champagne and 2019 champagne. In such a set up, the contract-address can be used in standard token gating interfaces to distinguish between owners of physical bottles manufactured in 2018 and 2019 and consequently differentiated access granted.

Note that also more than one claim contract (12) per physical item (2), respectively digital representation ID may be deployed, which allows more flexible token gating and different digital representation aggregation hierarchies. This results for a claim on behalf of a beneficiary (4), that after the atomic reassignment (11) e.g. one digital representation (1) per deployed smart contract (12) is accessible to the beneficiary account.

### SUPPLY CHAIN AND PRODUCTION

Some manufacturers of vehicles enforce the use of original parts. Essential vehicle parts, which are (e.g. via a bus system) connected to a micro-processor in the vehicle, are contacted and only if each part has authenticated itself via the bus to the micro-processor and therefore confirmed that it is an original or certified spare part, the vehicle would start. In this example we outline the preferrable implementation of the invention during the whole lifecycle of a gearbox and a wheel bearing that would otherwise be electrically integrated to authenticate a part. This has the benefit of less wiring, hence production costs and risk of failure decreases.

### System base setup

The minimal system setup consists of a device (15) and Trusted Authority (9) as well as typically one Claim contract (12) per product type. In our use case that means there is a first claim contract (12) for gearboxes and a second claim contract (12') for wheel bearings. As the supply chain is tracked as well, additional claim contracts can be provided/deployed for packaged gearboxes and wheel bearings. The packaging (2) itself comprises a uniquely identifiable security device (5).

The claim contracts (12) are configured in a way that only one digital representation (1) per security device (5) can exist simultaneously. Consequently, if the digital representation (1) is available to a first account (3), it will be atomically reassigned (via any of the introduced methods) to any second account (4).

### Phygital Identities in Production

At production time each part (2) is equipped with a security device (5). The security device (5) is registered at the Trusted Authority. Each production line has an account. At the end of the production line, there may be a programmable device (15) that measures the security devices and essentially triggers the proposed system resulting in a digital representation (1) of each and every produced part (2) being made available through the claim contract (12) ending up in the production-line's account. Note that the claim-contract (12) may also be configured to issue an additional, non-revocable "proof of creation" digital representation to the production line account. This claim is irrevocable and may serve for documentary purposes, (i.e. recall).

### Storage and shipping

The packaged product enters a storage facility where another device (15) is installed. Responsive to a proof of access (8), a digital representation (1) is made available to the warehouse account. This effectively "reassigns" the digital representation (1) from the production account (3) to the warehouse account (4) through any of the proposed methods. Note that the "proof-of-production" digital representation remains in the production's account, since it is not revokable, hence not transferable.

If applicable, further digital representations and identities may be minted, also via identity contracts (40,41) as the following sample use cases show:
- Decentralized Finance DeFi loans: A digital representation can be issued in an NFT format suitable for lending. This identity (32) can be stored in a lending protocol and be borrowed against. To prevent the bound (13) physical item (2) from leaving the warehouse, an identity revocation policy (47) is set that prevents the revocation. Preventing the revocation may crash any transaction, i.e. no other account can issue a digital representation (1) through the claim contract (12).
- DeFi insurances: An insurance identity (32) can be issued and used to obtain insurance for stock.
- Inventory and classical supply chain tracking (w/o details)
- Digitalizing paperwork, customs and tax documentation (w/o details)

When delivery is due, the warehouse checks the physical item out (optionally checking already whether the digital representation (1) and/or digital identity (32) is revokable), and the transport company may claim new identities (33) for insurance, inventory, and tracking. For example, before a checkout can occur, all loans and insurance policies need to be settled and destroyed (burned), which issues a new revocation policy (47) that now allows revocation.

### Mounting parts in vehicle

When a part (2) arrives at a workshop, it is checked into the inventory (4). Note that up to this point, all operations were done based on the security device (5) comprised on the packaging. As soon as the part (4) is used, the packaging (2) is opened and the part is captured (9) and proof of access (8) established. The digital representation (1) is issued on behalf of the particular vehicle's account (not pictured). The vehicle (hence, an object) maybe the controller of this account.

As soon as the part (2) is mounted in the vehicle, the digital representation (1) is issued on behalf of the vehicle's account. The vehicle itself and the maintenance crew may use this account for various reasons, for example:
- Genuine parts tracking: Ensure that the tractor is complete and assembled from original parts that are not end of life. The tractor does this check on every start. Otherwise it would not start. This functionality is implemented by the tractor company today through the introductory mentioned bus-system.
- Track maintenance intervals based on usage, automatically order new parts and schedule maintenance.
- Warranty and update of firmware, navigation and communication equipment.

Note that the vehicle may simultaneously be considered a physical item (2) which has its own digital representation (1) according to its own claim contract (12). The owner of the vehicle can claim digital representations (1‴) for it. So just like the gearbox, a vehicle can be e.g. collateral for a DeFi-loan or it's digital representation (1‴) used in the metaverse. Since the vehicle may be considered to be a physical item of complex nature, it may as well have a programmable device integrated, which operates an account.

### Permissive maintenance through owners

Based on the pre-configuration of the claim through the claim contract (12), quality of maintenance may be controlled: Some parts, i.e. the gearbox, require professional mechanics, while other parts, i.e. the wheel bearing, can be changed by an owner/operator. The particular digital representation (1) of each part contains the capabilities needed to define the requirements for the account that replaces parts.

### Tracking used parts and re-sell value

There typically is a big secondary market for parts and vehicles. Due to the approach disclosed here, each vehicle may have a maintenance record and a maintenance forecast readily available. If a part is unmounted from a vehicle it can potentially be resold. However, it may not be in the manufacturers interest to have a secondary market for wheel bearings, as they would be unsafe. At the same time it may make sense to have a secondary market for gearboxes. The Claim contracts (12) of those parts may specify their respective exact capabilities for the secondary market. While the wheel bearings claim contract may not allow a secondary offer, the gearboxes claim contract may allow secondary sales. Furthermore, the value of the gearbox may be exactly determined, as the gearboxes age, mileage and past maintenance are well-known (= evolvable NFT).

## Claims

1. A method for reassigning a digital representation of a physical item from a donor to a beneficiary, wherein the physical item comprises a security device, wherein the donor and the beneficiary are digital accounts, wherein each digital account is associated with an address in a cryptographic addressing system, the method comprising the following steps:
obtaining proof of access to the security device by performing a measurement of a physical property of the security device,
transmitting the address associated with the beneficiary in connection with the proof of access to a trusted authority,
performing an atomical reassignment of the digital representation to the address associated with the beneficiary responsive to authenticating the proof of access by the trusted authority.

2. The method of claim 1, **characterized in that** the atomical reassignment comprises: invalidating the digital representation held by the donor, and
reissuing a corresponding digital representation to the beneficiary.

3. The method of claim 1, **characterized in that** the atomical reassignment comprises a transaction from the donor to the beneficiary.

4. The method of any one of claims 1 to 3, **characterized in that** the digital representation and the corresponding digital representation both are cryptographically associated with an item identifier, wherein the item identifier is associated with the physical item, preferably uniquely associated.

5. The method of claim 2, **characterized in that** authenticating the proof of access to the security device comprises retrieving the item identifier.

6. The method of claim 2, **characterized in that** receiving the address of the beneficiary in connection with the proof of access to the security device comprises receiving the item identifier, wherein authenticating the proof of access to the security device is limited to the security device of the physical item associated with the item identifier.

7. The method of any one of claims 1 to 6, **characterized in that** the donor and the beneficiary are digital accounts in a public distributed ledger, the digital representation is part of a non-fungible token, preferably of a non-transferrable non-fungible token, tracked by the public distributed ledger, and the atomical reassignment of the digital representation is implemented by a smart contract deployed on the public distributed ledger.

8. The method of claim 7 and claim 2, **characterized in that** invalidating the digital representation held by the donor comprises: revoking or burning the non-fungible token comprising the digital representation held by the donor.

9. The method of claim 8, **characterized in that** the donor is not authorized to invalidate the non-fungible token, preferably only the owner of the smart contract, which is different from the donor and the beneficiary, is authorized to invalidate the non-fungible token.

10. The method of any one of claims 7 to 9, **characterized in that** the trusted authority is the owner of the smart contract.

11. The method of any one of claims 1 to 10, **characterized in that** the trusted authority stores reference characteristics of the security device and performs the step of authenticating the proof of access to the security device based on the reference characteristics.

12. The method of any one of claims 1 to 11, **characterized in that** the security device is an optical security device.

13. The method of claim 12, **characterized in that** the proof of access to the security device comprises one or more optical features of the optical security device, wherein the method comprises capturing the one or more optical features with a camera.

14. System for reassigning a digital representation of a physical item from a donor to a beneficiary, wherein the physical item comprises a security device, the system comprising:
a sensor,
an authentication service provided by a computer system, and
a smart contract deployed on a public distributed ledger,
wherein the sensor is configured to perform a measurement of a physical property of the security device,
wherein the authentication service is configured to receive the measurement as a proof of access to the security device in connection with an address in a cryptographic addressing system, to determine a digital representation of the physical item based on the proof of access, and to transmit the received address and the digital representation to the smart contract responsive to authenticating the proof of access,
wherein the smart contract is configured to, based on the address and digital representation transmitted from the authentication service, perform an atomical reassignment of the digital representation to the address.

15. Computer program product for reassigning a digital representation of a physical item from a donor to a beneficiary comprising instructions which, when the program is executed by a computer participating in a public distributed ledger, cause the computer to carry out the steps:
receiving a message from an authentication service, the message comprising the digital representation and an address in a cryptographic addressing system,
cryptographically authenticating that the authentication service is a trusted authentication service,
performing an atomical reassignment of the received digital representation to the received address.
